# FASCICULE DE BREVET EUROPEEN

(11) **EP 3 671 134 B1**
(45) Date de publication et mention de la délivrance du brevet: **21.09.2022**
(21) Numéro de dépôt: 18215436.9
(22) Date de dépôt: 21.12.2018
(51) Int. Cl.: G01D 5/347, G04C 3/00

(54) **SYSTEME ET PROCEDE DE DETERMINATION D'AU MOINS UN PARAMETRE RELATIF A UN MOUVEMENT ANGULAIRE D'UN AXE**
SYSTEM UND VERFAHREN ZUR BESTIMMUNG MINDESTENS EINES PARAMETERS DER WINKELBEWEGUNG EINER ACHSE
SYSTEM AND METHOD FOR DETERMINING AT LEAST ONE PARAMETER RELATING TO AN ANGULAR MOVEMENT OF AN AXIS

(43) Date de publication de la demande: 24.06.2020
(73) Titulaire: The Swatch Group Research and Development Ltd, 2074 Marin (CH)
(72) Inventeur: TORTORA, Pierpasquale, 2000 Neuchâtel (CH); ZANESCO, Vittorio, 2000 Neuchâtel (CH)
(74) Mandataire: ICB SA

(56) Documents cités:
- EP-A1- 2 884 239
- EP-A1- 3 015 925
- US-B1- 9 797 753

## Description

### DOMAINE TECHNIQUE DE L'INVENTION

L'invention concerne un système et un procédé de détermination d'au moins un paramètre relatif à un mouvement angulaire d'un axe apte à tourner sur lui-même. Un tel paramètre est par exemple la position angulaire, ou bien la vitesse de rotation, ou encore le sens de rotation de l'axe.

L'invention concerne également une pièce d'horlogerie comprenant le système de détermination. La pièce d'horlogerie est par exemple une montre à quartz, l'axe étant alors l'axe solidaire d'une couronne de réglage de l'heure.

### ETAT DE LA TECHNIQUE

Il est connu de munir une montre, par exemple une montre à quartz, d'une couronne électronique grâce à laquelle un utilisateur peut régler l'heure et donc la position des aiguilles sans contact avec le rouage de la montre. Pour ce faire, un dispositif électronique ou optique ou électro-optique est agencé au sein de la montre, qui permet de déterminer un ou plusieurs paramètres relatifs au mouvement angulaire de l'axe solidaire de la couronne, et d'ainsi positionner les aiguilles à la position souhaitée par l'utilisateur. Plus précisément, l'action de rotation de la couronne effectuée par l'utilisateur est traduite par le dispositif en impulsion électronique vers un processeur de la montre, afin de lui communiquer de combien de pas et dans quelle direction il faut tourner les aiguilles. Ce genre de codage peut par exemple être réalisé via un contact galvanique, une bobine magnétique exploitant l'effet Hall, un dispositif capacitif, ou encore un dispositif électro-optique mettant en œuvre une émission et détection de signaux lumineux.

Un tel dispositif électro-optique, permettant notamment de déterminer la position angulaire et/ou le sens de rotation de l'axe solidaire d'une couronne de montre, est par exemple décrit dans le document brevet EP 3 015 925 A1. L'axe solidaire de la couronne présente sur son pourtour extérieur une surface de réflexion. Le dispositif comporte une source de lumière destinée à illuminer la surface de réflexion, ainsi qu'un détecteur de lumière destiné à recevoir un faisceau de lumière réfléchie issu de la surface de réflexion et à générer un signal électrique représentatif du faisceau. Le dispositif comporte en outre un processeur configuré pour former, à partir des signaux électriques reçus du détecteur, au moins deux motifs de pixels à deux instants différents. Le processeur est également configuré pour comparer les motifs de pixels successifs, et pour en déduire au moins un paramètre relatif au mouvement angulaire de l'axe si un décalage s'est produit entre les motifs de pixels.

Toutefois, un inconvénient du dispositif électro-optique proposé dans le document brevet EP 3 015 925 A1 est qu'il génère des temps de traitement relativement importants pour le processeur, du fait du nombre des données acquises. Une telle solution requiert ainsi de fournir une puissance suffisante pour le processeur, ce qui impacte la taille générale de ce dernier, ainsi que la consommation du dispositif. Or, l'espace et l'énergie disponibles étant particulièrement contraints au sein d'une montre, ceci peut s'avérer problématique pour l'encombrement général du système et son autonomie.

Le document brevet US 9,797,753 B1 décrit un encodeur optique pour le réglage de fonctions d'une montre. L'encodeur comprend un axe rotatif avec une surface structurée, une source de lumière pour illuminer la surface structurée, un réseau de capteurs optiques pour recevoir une portion d'une réflexion de lumière sur la surface structurée et un processeur pour traiter les informations des capteurs optiques. Une seule source de lumière est prévue ce qui ne permet pas de déterminer précisément et de manière simple tout mouvement angulaire de l'axe en rotation

### RESUMÉ DE L'INVENTION

L'invention a donc pour but de fournir un système électro-optique de détermination d'au moins un paramètre relatif à un mouvement angulaire d'un axe apte à tourner sur lui-même, qui permette de fonctionner avec un nombre de données acquises limité pour réduire la puissance de traitement nécessaire, tout en assurant une détermination précise et rapide du ou des paramètre(s).

A cet effet, l'invention concerne un système de détermination d'au moins un paramètre relatif à un mouvement angulaire d'un axe, notamment d'un axe solidaire d'une couronne de pièce d'horlogerie, qui comprend les caractéristiques mentionnées dans la revendication indépendante 1.

Des formes particulières du système sont définies dans les revendications dépendantes 2 à 8.

Grâce au motif de points absorbants réalisés sur la surface cylindrique du réflecteur rotatif, les détecteurs de lumière du système selon l'invention génèrent chacun un signal électrique représentatif qui présente une forme sensiblement sinusoïdale, lorsque le réflecteur tourne sur lui-même selon un même sens de rotation. Plus précisément, l'agencement des points d'absorption de lumière sur la surface extérieure du réflecteur, vue depuis chaque paire d'émetteur-détecteur, évolue lorsque le réflecteur tourne sur lui-même de manière régulière et d'une manière telle que le signal électrique représentatif généré par chaque détecteur présente une forme sensiblement sinusoïdale. Grâce à la forme sensiblement sinusoïdale des signaux générés par les détecteurs, le traitement effectué par le processeur du système, pour la détermination du ou des paramètre(s) relatif(s) au mouvement angulaire de l'axe, est allégé. Ceci permet de déterminer le ou les paramètre(s) de manière précise, fiable, et avec un nombre de données acquises limité permettant un temps de traitement rapide, un encombrement faible et une consommation d'énergie minimale du processeur.

Avantageusement, les deux paires d'émetteur-détecteur sont agencées par rapport au réflecteur rotatif de manière à ce que les deux émetteurs, respectivement les deux détecteurs, sont agencés tête-bêche l'un par rapport à l'autre. Ceci permet d'introduire un déphasage entre les signaux générés par les deux détecteurs de lumière, lorsque le réflecteur tourne sur lui-même. Un tel déphasage permet au programme d'ordinateur implémenté dans des moyens mémoire du système de pouvoir déterminer le sens ou la vitesse de rotation de l'axe. En outre, grâce à cet agencement spatial des deux paires d'émetteur-détecteur, aucun des détecteurs de lumière ne rate le faisceau de lumière réfléchie issu du réflecteur.

Avantageusement, les deux paires d'émetteur-détecteur sont disposées de part et d'autre du réflecteur rotatif, sur un cercle dont le centre est sensiblement le centre du réflecteur rotatif, et sont décalées entre elles d'un angle présentant une valeur distincte de 180°. Cette caractéristique permet d'introduire un déphasage et/ou d'accentuer le déphasage existant entre les signaux générés par les deux détecteurs de lumière, lorsque le réflecteur tourne sur lui-même. En effet, les deux paires d'émetteur-détecteur ne voient alors pas le réflecteur sous le même angle, ce qui introduit un déphasage entre les signaux générés. De préférence, le déphasage total créé entre les deux signaux est d'au moins 25°, de préférence encore sensiblement égal à 90°.

Selon une caractéristique technique particulière de l'invention, le réflecteur rotatif est formé à partir d'un cylindre de révolution. L'agencement des points d'absorption peut être réalisé au moyen d'une gravure par laser, voire par dépôt de points noirs (encre) provenant d'une imprimante digitale.

A cet effet, l'invention concerne également une pièce d'horlogerie comportant le système de détermination décrit ci-dessus, qui comprend les caractéristiques mentionnées dans la revendication indépendante 9.

Une forme particulière de la pièce d'horlogerie est définie dans la revendication dépendante 10.

A cet effet, l'invention concerne également un procédé de détermination d'au moins un paramètre relatif à un mouvement angulaire d'un axe, notamment d'un axe solidaire d'une couronne de pièce d'horlogerie, au moyen du système de détermination décrit ci-dessus, et qui comprend les caractéristiques mentionnées dans la revendication indépendante 11.

Des formes particulières du procédé sont définies dans les revendications dépendantes 12 à 14.

Avantageusement, le procédé comprend en outre une étape, mise en œuvre par le processeur, consistant à représenter les deux signaux électriques reçus comme le sinus et le cosinus d'une même fonction et à calculer une fonction d'arc tangente ayant pour variable le rapport entre les deux signaux. Ceci permet de déterminer la position angulaire de l'axe à tout moment, et ce de manière non équivoque.

Avantageusement, le procédé comprend en outre une étape, mise en oeuvre par le processeur, consistant à déterminer, en fonction du signe de la pente de la fonction d'arc tangente calculée, le sens de rotation de l'axe.

Avantageusement, le procédé comprend en outre une étape, mise en œuvre par le processeur, consistant à commander l'allumage de chacune des sources de lumière de manière alternée. Ceci permet d'éviter que le détecteur d'une des paires d'émetteur-détecteur soit influencé par la lumière issue de l'émetteur de l'autre paire d'émetteur-détecteur.

A cet effet, l'invention concerne également un programme d'ordinateur comportant des instructions de programme stockées dans des moyens mémoire du système de détermination décrit ci-dessus et qui, lorsqu'exécutées par le processeur du système, sont aptes à mettre en œuvre le procédé de détermination tel que décrit ci-dessus, et qui comprend les caractéristiques mentionnées dans la revendication indépendante 15.

### BRÈVE DESCRIPTION DES FIGURES

Les buts, avantages et caractéristiques du système et du procédé de détermination selon l'invention, ainsi que de la pièce d'horlogerie comprenant le système, apparaîtront mieux dans la description suivante sur la base d'au moins une forme d'exécution non limitative illustrée par les dessins sur lesquels :
- la figure 1 est une vue en perspective d'une montre munie d'une couronne de réglage de l'heure, et d'un système de détermination d'au moins un paramètre relatif à un mouvement angulaire de l'axe solidaire de la couronne, selon l'invention;
- la figure 2 est une vue en perspective du système de la figure 1, le système comprenant un réflecteur rotatif et deux paires d'émetteur-détecteur;
- la figure 3 est une vue de face du système de la figure 2;
- la figure 4 est une vue en perspective du réflecteur rotatif de la figure 2;
- la figure 5 représente un calcul d'une matrice de pixels noir-blanc à graver ou imprimer sur la paroi du réflecteur afin de moduler la réflectivité de sa surface selon une fonction sinusoïdale;
- la figure 6 est un diagramme représentant l'évolution de deux signaux électriques générés par les détecteurs des deux paires d'émetteur-détecteur, en fonction de la position angulaire du réflecteur rotatif;
- la figure 7 est un organigramme représentant des étapes d'un procédé de détermination d'au moins un paramètre relatif à un mouvement angulaire d'un axe, mis en œuvre par le système de la figure 1; et
- la figure 8 est un diagramme représentant l'évolution d'une fonction d'arc tangente calculée par un processeur du système de la figure 2, en fonction de la position angulaire du réflecteur rotatif.

### DESCRIPTION DETAILLEE DE L'INVENTION

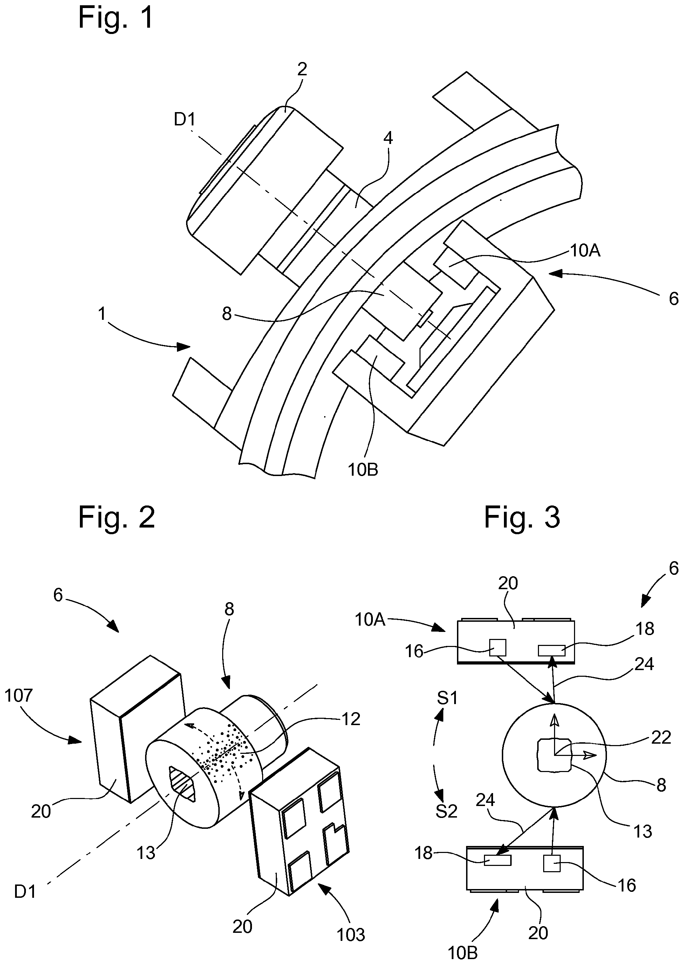

La figure 1 représente une partie d'une montre 1 munie d'une couronne 2 de réglage de l'heure. La couronne 2 est solidarisée à un axe 4 qui s'étend en partie à l'intérieur de la montre 1, notamment de la boîte de montre. La montre 1, qui est par exemple une montre à quartz, comprend en outre un système 6 de détermination d'au moins un paramètre relatif à un mouvement angulaire de l'axe 4 solidaire de la couronne 2.

L'axe 4 est apte à tourner sur lui-même autour d'une direction longitudinale D1. Plus précisément, lorsque la couronne 2 est tournée par un utilisateur pour le réglage de l'heure, l'axe 4 est entraîné en rotation sur lui-même autour de la direction D1. Il est à noter qu'optionnellement, la couronne 2 peut être configurée pour pouvoir être tirée et/ou poussée par un utilisateur, entraînant l'axe 4 en translation longitudinale. Lorsque l'axe 4 équipe une montre 1, comme c'est le cas dans l'exemple illustratif des figures 1 à 4, le diamètre de l'axe 4 est typiquement compris dans une plage allant de 0.5 à 2 mm.

Comme illustré sur les figures 2 et 3, le système 6 comprend, outre l'axe 4, un réflecteur rotatif 8 et deux paires 10A, 10B d'émetteur-détecteur de lumière. Le système 6 comprend également un processeur et des moyens mémoire, ces éléments n'étant pas représentés sur les figures pour des raisons de clarté.

Le réflecteur rotatif 8 est monté sur l'axe 4, autour de ce dernier. Le réflecteur rotatif 8 est ainsi solidarisé à l'axe 4. Le réflecteur rotatif 8 est par exemple monté sur une partie d'extrémité de l'axe 4, bien que cet agencement particulier du réflecteur 8 sur l'axe 4 ne soit nullement limitatif dans le cadre de la présente invention. Le réflecteur 8 et l'axe 4 peuvent aussi former une seule pièce monobloc non représentée.

Comme montré aux figures 2 à 4, le réflecteur rotatif 8 est de préférence formé à partir d'un cylindre de révolution. La surface périphérique 12 du réflecteur 8 est initialement entièrement polie pour avoir une réflectivité de lumière constante comme un miroir. Cette réflectivité constante est donnée uniquement par les propriétés du matériau et la qualité de la surface. Ce réflecteur cylindrique 8 peut être par exemple d'un diamètre de 1.3 mm et d'une longueur de 0.77 mm. Ces dimensions ne sont données qu'à titre purement indicatif sans limitations pour d'autres valeurs.

Le réflecteur rotatif 8 est par exemple en métal. Le métal du réflecteur 8 est de préférence choisi de sorte que la surface polie 12 présente une bonne réflexion dans les longueurs d'onde de la lumière émise par les émetteurs de lumière. Par exemple, pour des émetteurs de lumière infrarouge, le métal choisi pour le réflecteur 8 peut être un dépôt d'or. Le choix du métal pour le réflecteur 8 est ainsi conditionné par le type d'émetteurs de lumière choisi, et peut être ajusté selon les contraintes du produit.

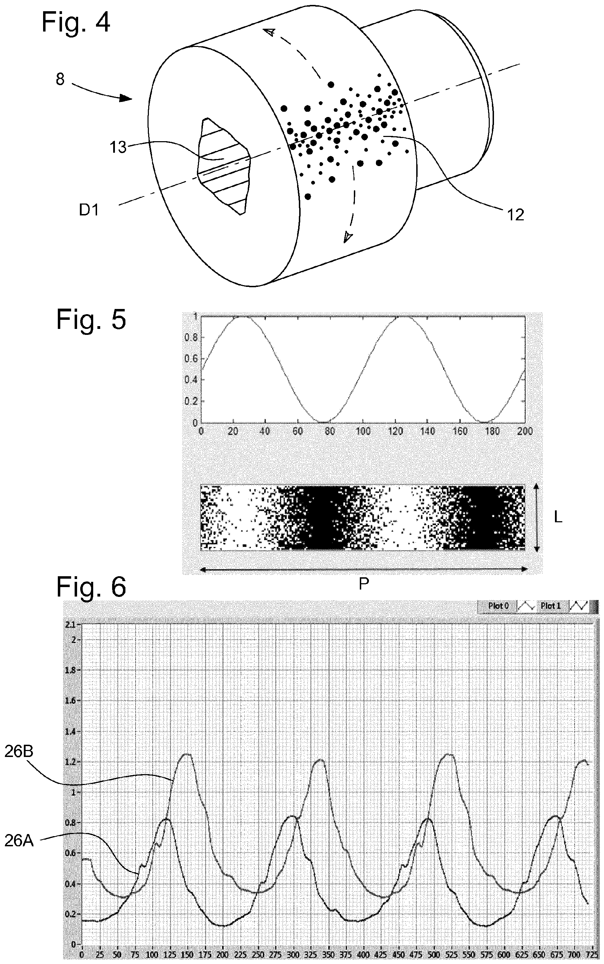

Dans une opération subséquente, il est prévu de graver ou de déposer notamment par impression par exemple un agencement de points d'absorption sur toute la circonférence de la surface polie 12 du cylindre de révolution. Cet agencement de points n'est pas complétement montré aux figures 1 à 4 par simplification, mais est représenté à la figure 5 comme expliqué ci-après. Ainsi avant de réaliser cet agencement de points d'absorption de lumière sur la surface polie, il doit être généré un motif de points d'absorption (points noirs). Ceci est obtenu sous forme d'une image 2D sur un ordinateur par exemple, et plus précisément d'une matrice de pixels noir-blanc.

La figure 5 représente une fonction sinusoïdale de fréquence 2 à laquelle il peut être ajouté un offset de 1 pour que la valeur soit toujours positive. Cette fonction sinusoïdale oscille entre 1 et 0. La fréquence 2 signifie que sur un tour complet du réflecteur 8, il y a détection de deux ondes sinusoïdales complètes de faisceaux de lumière réfléchis par les détecteurs, c'est-à-dire 180° pour chaque période d'onde sinusoïdale. La matrice de points à réaliser sur la surface polie du cylindre, est montrée en image 2D sous le graphe de la fonction sinusoïdale. Cette image 2D doit être reproduite sur toute la circonférence de périphérie P de la surface polie du cylindre de révolution et sur une longueur L du cylindre.

Il est procédé par colonnes. Les points où la fonction vaut 1, la réflectivité du miroir doit être maximale. Donc sur cette colonne aucun pixel s'absorption (noir) ne sera réalisé. Par contre, là où la fonction vaut 0, la réflectivité doit être minimale. Donc tous les pixels de cette colonne seront notamment noirs.

En terme de pixels, et dans l'exemple montré à la figure 5, une réflectivité 1 veut dire que par exemple 39 pixels de la colonne sont tous blancs. Une réflectivité 0 veut dire que par exemple 39 pixels de la colonne sont tous noirs. Les cas intermédiaires sont traités de la manière suivante. Si à un certain point la fonction vaut 0.6, ça veut dire que 60% des pixels doivent rester blanc (23 pixels) et 40% d'eux doivent être noirs (16 pixels). Dans l'exemple non limitatif représenté, le cylindre a une circonférence de périphérie P égale à 4 mm et une longueur L égale à 0.77 mm. L'image de départ se compose d'un rectangle de 4 mm sur 0.77 mm, donc 200 fois 39 pixels. Ces pixels ou points dans ce cas sont de 20 µm sur 20 µm.

Le but avec cet agencement de points sur le réflecteur 8 est d'obtenir un signal notamment de forme sinusoïdale à la détection de lumière par chaque détecteur 18 des paires d'émetteur-détecteur. Pour ce faire, le réflecteur 8 tourne sur lui-même de manière régulière, notamment à vitesse presque constante et dans un même sens de rotation, et encore sur la base d'une modulation de réflectivité de lumière.

L'image présentée à la figure 5 peut être gravée ou imprimée sur la surface polie du réflecteur 8 sous la forme d'un cylindre de révolution. La gravure des points d'absorption peut être obtenue par exemple par un faisceau laser. Si chaque point d'absorption (noir) est de dimension de 20 µm sur 20 µm, le faisceau laser de gravure peut être un spot de 20 µm en étant contrôlé depuis l'ordinateur par une unité de contrôle. Cette image 2D est chargée dans l'unité de contrôle du laser et ensuite gravée sur la paroi du cylindre à l'aide d'un posage rotatif synchronisé avec l'émission laser.

Il est à noter qu'il est bien connu que par l'action d'un faisceau laser, on peut modifier les propriétés optiques de la surface d'un matériau. Un laser peut donc être utilisé pour graver localement des points d'absorption sur la surface du réflecteur. Les paramètres du laser sont maintenus constants pendant l'usinage de la pièce de manière que chaque point noir absorbe la lumière avec une efficacité uniforme. Dans ces conditions, la modulation de la réflectivité est due uniquement à la densité de points noirs comme représenté en figure 5. Au fur et à mesure que le réflecteur tourne en face de l'émetteur de lumière, la densité des points absorbants varie et ceci produit une variation de la lumière réfléchie et envoyée vers le détecteur correspondant. Comme indiqué cette variation de lumière réfléchie génère un signal de détection, qui peut être sinusoïdal selon l'agencement de points absorbants réalisés sur le réflecteur qui tourne sur lui-même et dans un même sens de rotation. Il est aussi envisageable d'avoir une surface absorbante, par exemple à l'aide d'un traitement PVD, dont le gravage, par exemple par laser, révèle des points de réflexion, et non d'absorption.

Comme monté aux figures 1 à 3 et expliqué en partie ci-dessus, chaque paire 10A, 10B d'émetteur-détecteur comprend une source de lumière 16 et un détecteur de lumière 18. La source de lumière 16 est typiquement constituée d'une ou plusieurs diodes électroluminescentes, apte(s) par exemple à émettre de la lumière infrarouge. La source de lumière 16 et le détecteur de lumière 18 sont agencés dans un boîtier de protection 20 et sont de préférence isolés optiquement l'un de l'autre, par exemple au moyen d'une paroi de séparation. Chaque paire 10A, 10B d'émetteur-détecteur forme par exemple un dispositif unitaire du type détecteur de proximité.

Les deux paires 10A, 10B d'émetteur-détecteur sont disposées de part et d'autre du réflecteur rotatif 8, en regard du réflecteur 8. Dans un mode de réalisation préférentiel représenté sur la figure 3, les deux paires 10A, 10B d'émetteur-détecteur sont agencées par rapport au réflecteur rotatif 8 de manière à ce que les deux émetteurs 16, respectivement les deux détecteurs 18, sont agencés tête-bêche l'un par rapport à l'autre. De préférence, comme illustré sur la figure 3, les deux paires d'émetteur-détecteur 10A, 10B sont placées sur un cercle dont le centre est sensiblement le centre 22 du réflecteur rotatif 8, et sont décalées entre elles d'un angle présentant une valeur distincte de 180°.

De préférence encore, comme visible sur la figure 3, les deux paires 10A, 10B d'émetteur-détecteur et le réflecteur rotatif 8 sont disposés de sorte à définir un agencement spatial sensiblement en forme de « y ». Plus précisément, le réflecteur rotatif 8 est disposé au centre du « y », une première paire 10A d'émetteur-détecteur est disposée à l'extrémité libre d'une branche courte du « y », et l'autre paire 10B d'émetteur-détecteur est disposée à l'extrémité libre de la branche longue du « y ». Autrement dit, comme visible sur la figure 3, les deux paires 10A, 10B d'émetteur-détecteur sont disposées de part et d'autre du réflecteur rotatif 8 et sont décalées axialement entre elles.

Chaque source de lumière 16 est destinée à illuminer une partie du réflecteur 8. Chaque détecteur de lumière 18 est destiné à recevoir un faisceau de lumière réfléchie 24 issu du réflecteur 8 et à générer un signal électrique représentatif du faisceau 24. Le signal électrique représentatif généré par chaque détecteur 18 présente une forme sensiblement sinusoïdale lorsque le réflecteur 8 tourne sur lui-même selon un même sens de rotation S1, S2. Un tel signal 26A, 26B est par exemple visible sur la figure 6.

Le processeur est configuré pour traiter chacun des signaux électriques 26A, 26B générés par les détecteurs 18. Le processeur est configuré en outre pour déterminer, en fonction du résultat du traitement, au moins un paramètre relatif au mouvement angulaire de l'axe 4, comme cela sera détaillé par la suite. Le ou les paramètre(s) déterminé(s) sont par exemple la position angulaire, la vitesse de rotation, ou encore le sens de rotation de l'axe 4.

Sur la figure 6 sont représentés deux signaux 26A, 26B réels issus des détecteurs 18, selon différents angles correspondant à une rotation sur lui-même du réflecteur rotatif 8. Chaque signal 26A, 26B est issu d'un détecteur respectif 18 d'une des paires 10A, 10B d'émetteur-détecteur. Chaque signal 26A, 26B présente une forme sensiblement sinusoïdale. En outre, dans l'exemple illustratif de la figure 6, les signaux 26A, 26B sont déphasés entre eux de 25° environ. De préférence, les signaux 26A, 26B sont déphasés d'au moins 25°, de préférence encore de sensiblement 90°.

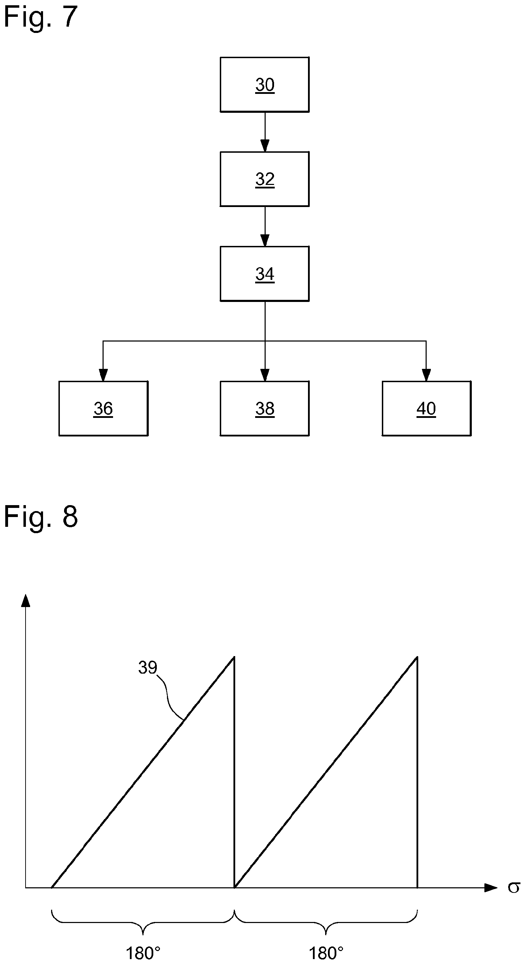

Un procédé selon l'invention de détermination d'au moins un paramètre relatif à un mouvement angulaire de l'axe 4, mis en œuvre par le processeur du système 6, va maintenant être décrit en référence aux figures 7 et 8. On suppose qu'initialement un utilisateur manipule l'axe 4 de manière à le faire tourner sur lui-même autour de la direction longitudinale D1, par exemple en manipulant la couronne 2 pour le réglage de l'heure d'une montre 1. Cette rotation de l'axe 4 entraîne une rotation du réflecteur rotatif 8 autour de la direction longitudinale D1.

De préférence, le procédé comporte une étape initiale 30 au cours de laquelle le processeur commande l'allumage de chacune des sources de lumière 16 de manière alternée.

Au cours d'une étape initiale ou suivante 32, le processeur reçoit deux signaux électriques 26A, 26B issus des deux détecteurs de lumière 18. Chacun des signaux électriques 26A, 26B est représentatif d'un faisceau de lumière réfléchie 24 issu du réflecteur 8, et présente une forme sensiblement sinusoïdale.

Au cours d'une étape suivante 34, le processeur détermine la fréquence de chacun des deux signaux sinusoïdaux 26A, 26B reçus.

Au cours d'une étape suivante 36, le processeur détermine la vitesse de rotation de l'axe 4, par comparaison entre la fréquence déterminée au cours de l'étape 34 et une table de correspondance pré-enregistrée dans les moyens mémoire du système.

De préférence, le procédé comporte une étape parallèle ou suivante 38, au cours de laquelle le processeur représente les deux signaux électriques 26A, 26B reçus comme le sinus et le cosinus d'une même fonction, puis calcule une fonction d'arc tangente ayant pour variable le rapport entre les deux signaux. Le résultat de ce calcul est représenté à la figure 8, pour l'exemple de réalisation particulier des signaux 26A, 26B représentés à la figure 6. On remarque que sur une demi période de révolution du réflecteur rotatif 8, correspondant à 180°, la courbe obtenue 39 est une droite. Ceci permet ainsi au processeur, en ayant accès à une valeur donnée de la fonction d'arc tangente calculée, d'en déduire la position angulaire de l'axe 4, et ce de manière non équivoque. En outre, le signe de la pente de la droite obtenue est fonction du sens de rotation de l'axe 4. Ainsi, le procédé peut comporter une étape parallèle ou suivante 40 au cours de laquelle le processeur détermine, en fonction du signe de la pente de la droite obtenue, le sens de rotation de l'axe 4.

Il est à noter que, pour obtenir la forme de la courbe 39 telle que représentée à la figure 8, il est nécessaire que les signaux 26A, 26B soient déphasés, de préférence d'au moins 25°. Un tel déphasage est obtenu par l'agencement tête-bêche des paires 10A, 10B d'émetteur-détecteur, tel que précédemment décrit, et/ou par la disposition non symétrique des deux paires 10A, 10B d'émetteur-détecteur de part et d'autre du réflecteur rotatif 8, telle que décrite précédemment. Ainsi, le déphasage résultant entre les signaux 26A, 26B permet d'obtenir la forme de la courbe 39 telle que représentée à la figure 8, et permet par conséquent au processeur de pouvoir déterminer précisément la position angulaire et le sens de rotation de l'axe 4.

Les moyens mémoire stockent un produit programme d'ordinateur comportant des instructions de programme qui, lorsqu'exécutées par le processeur du système 6, sont aptes à mettre en œuvre le procédé tel que décrit ci-dessus.

Il est encore à noter que l'algorithme décrit ci-dessus pour la génération de l'image de réflectivité, reste de validité générale aussi lorsque le motif sur le réflecteur cylindrique est réalisé avec d'autres techniques que le laser. Par exemple les pixels noirs pourraient être réalisés à l'aide d'une encre noire éjectée par une imprimante digitale.

Il est encore à noter que le même algorithme peut être utilisé pour réaliser d'autres allures de la réflectivité et générer d'autres signaux dans le détecteur tels qu'une onde carrée ou une rampe. Cependant il est plus difficile de déterminer facilement la vitesse de rotation de l'axe ou tige solidaire de la couronne.

## Revendications

1. Système de détermination (6) d'au moins un paramètre relatif à un mouvement angulaire d'un axe (4), notamment d'un axe (4) solidaire d'une couronne (2) de pièce d'horlogerie (1), le système (6) comprenant :
- un axe (4) configuré de manière à pouvoir tourner sur lui-même autour d'une direction longitudinale (D1),
- un réflecteur rotatif (8) monté sur l'axe (4), autour dudit axe (4),
- un processeur configuré pour traiter chacun des signaux électriques générés par les détecteurs (18), et pour déterminer, en fonction du résultat du traitement, ledit au moins un paramètre relatif au mouvement angulaire de l'axe (4),
le réflecteur rotatif (8) étant sous la forme d'un cylindre de révolution, et un agencement de points d'absorption de lumière est réalisé sur toute la circonférence d'une surface extérieure réfléchissante (12) du cylindre de révolution, les points de l'agencement de points d'absorption de lumière sur toute la circonférence de la surface extérieure (12) du cylindre de révolution, d'une part étant obtenus par gravure au moyen d'un laser contrôlé sur la base d'une image déterminée définissant une matrice de points ou pixels, ou d'autre part étant obtenus par dépôt de points noirs d'encre provenant d'une imprimante digitale sur la base d'une image déterminée définissant une matrice de points ou pixels, où la densité des points absorbants varie de manière sinusoïdale, l'agencement des points d'absorption sur la surface extérieure (12) étant tel que, lorsque le réflecteur (8) tourne sur lui-même de manière régulière et selon un même sens de rotation (S1, S2), le signal électrique représentatif (26A, 26B) généré par chaque détecteur (18) de chaque paire (10A, 10B) présente une forme sensiblement sinusoïdale,
**caractérisée en ce que** le système comprend:
deux paires (10A, 10B) d'émetteur-détecteur, les deux paires (10A, 10B) étant disposées de part et d'autre du réflecteur rotatif (8), en regard du réflecteur (8), chaque paire (10A, 10B) d'émetteur-détecteur comprenant une source de lumière (16) destinée à illuminer une partie du réflecteur (8), et un détecteur de lumière (18) destiné à recevoir un faisceau de lumière réfléchie (24) issu du réflecteur (8) et à générer un signal électrique (26A, 26B) représentatif dudit faisceau (24).

2. Système de détermination (6) selon la revendication 1, **caractérisé en ce que** les deux paires (10A, 10B) d'émetteur-détecteur sont agencées par rapport au réflecteur rotatif (8) de manière à ce que les deux émetteurs (16), respectivement les deux détecteurs (18), sont agencés tête-bêche l'un par rapport à l'autre.

3. Système de détermination (6) selon la revendication 1 ou 2, **caractérisé en ce que** les deux paires (10A, 10B) d'émetteur-détecteur sont disposées de part et d'autre du réflecteur rotatif (8), sur un cercle dont le centre est sensiblement un centre (22) du réflecteur rotatif (8), et sont décalées entre elles d'un angle présentant une valeur distincte de 180°.

4. Système de détermination (6) selon la revendication 3, **caractérisé en ce que** les deux paires (10A, 10B) d'émetteur-détecteur et le réflecteur rotatif (8) sont disposés de sorte à définir un agencement spatial sensiblement en forme de « y », le réflecteur rotatif (8) étant disposé au centre du « y », une des paires d'émetteur-détecteur (10A) étant disposée à l'extrémité libre d'une branche courte du « y », l'autre paire d'émetteur-détecteur (10B) étant disposée à l'extrémité libre de la branche longue du « y ».

5. Système de détermination (6) selon l'une quelconque des revendications précédentes, **caractérisé en ce que**, dans chaque paire (10A, 10B) d'émetteur-détecteur, l'émetteur (16) et le détecteur (18) sont isolés optiquement l'un de l'autre.

6. Système de détermination (6) selon la revendication 1, **caractérisé en ce que** le réflecteur rotatif (8) est en métal, la surface extérieure (12) du réflecteur en métal étant polie.

7. Système de détermination (6) selon la revendication 6, **caractérisé en ce que** la densité de points absorbants gravés ou imprimés sur toute la circonférence de la surface extérieure varie selon deux périodes d'onde sinusoïdale.

8. Pièce d'horlogerie (1) comportant un système de détermination (6) d'au moins un paramètre relatif à un mouvement angulaire d'un axe (4), **caractérisée en ce que** le système de détermination (6) est conforme à l'une quelconque des revendications précédentes.

9. Pièce d'horlogerie (1) selon la revendication 8, **caractérisée en ce que** la pièce d'horlogerie (1) est une montre à quartz munie d'une couronne (2) de réglage de l'heure, ledit axe (4) étant l'axe (4) solidaire de la couronne (2).

10. Procédé de détermination d'au moins un paramètre relatif à un mouvement angulaire d'un axe (4), notamment d'un axe (4) solidaire d'une couronne (2) de pièce d'horlogerie (1), au moyen d'un système de détermination (6) selon l'une quelconque des revendications 1 à 6, le procédé comprenant les étapes suivantes, mises en œuvre par le processeur :
- recevoir (32) deux signaux électriques (26A, 26B) issus des deux détecteurs de lumière (18), chacun des signaux électriques (26A, 26B) étant représentatif d'un faisceau de lumière réfléchie (24) issu du réflecteur (8), chacun des signaux électriques (26A, 26B) présentant une forme sensiblement sinusoïdale,
- déterminer (34) la fréquence de chacun des deux signaux électriques reçus (26A, 26B),
- déterminer (36), par comparaison entre la fréquence déterminée par le processeur et une table de correspondance pré-enregistrée dans des moyens mémoire du système (6), la vitesse de rotation de l'axe (4).

11. Procédé de détermination selon la revendication 10 lorsque le système de détermination (6) dépend de la revendication 3, **caractérisé en ce qu'**il comprend en outre une étape (38), mise en œuvre par le processeur, consistant à représenter les deux signaux électriques (26A, 26B) reçus comme le sinus et le cosinus d'une même fonction et à calculer une fonction d'arc tangente (39) ayant pour variable le rapport entre les deux signaux.

12. Procédé de détermination selon la revendication 11, **caractérisé en ce qu'**il comprend en outre une étape (40), mise en œuvre par le processeur, consistant à déterminer, en fonction du signe de la pente de la fonction d'arc tangente (39) calculée, le sens de rotation de l'axe (4).

13. Procédé de détermination selon l'une des revendications 10 à 12 **caractérisé en ce qu'**il comprend en outre une étape (30), mise en œuvre par le processeur, consistant à commander l'allumage de chacune des sources de lumière (16) de manière alternée.

14. Produit programme d'ordinateur comportant des instructions de programme stockées dans des moyens mémoire d'un système de détermination (6) selon l'une des revendications 1 à 6 et qui, lorsqu'exécutées par le processeur du système de détermination (6), sont aptes à mettre en œuvre le procédé selon l'une des revendications 10 à 13, pour la détermination d'au moins un paramètre relatif à un mouvement angulaire d'un axe (4).

## Patentansprüche

1. System zur Bestimmung (6) mindestens eines Parameters bezüglich einer Winkelbewegung einer Achse (4), insbesondere einer Achse (4), die fest mit einer Krone (2) eines Zeitmessgeräts (1) verbunden ist, wobei das System (6) umfasst:
- eine Achse (4), die so konfiguriert ist, dass sie sich um sich selbst um eine Längsrichtung (D1) drehen kann,
- einen drehbaren Reflektor (8), der auf der Achse (4) um die Achse (4) montiert ist,
- einen Prozessor, der so konfiguriert ist, dass er jedes der von den Detektoren (18) erzeugten elektrischen Signale verarbeitet und entsprechend dem Ergebnis der Verarbeitung den mindestens einen Parameter bezüglich der Winkelbewegung der Achse (4) bestimmt,
den rotierenden Reflektor (8) in Form eines Rotationszylinders, und eine Anordnung von lichtabsorbierenden Punkten über den gesamten Umfang einer reflektierenden Außenfläche (12) des Rotationszylinders bereitgestellt wird, wobei die Punkte der Anordnung von lichtabsorbierenden Punkten über den gesamten Umfang der Außenfläche (12) des Rotationszylinders, zum einen durch Gravur mit einem kontrollierten Laser auf der Grundlage eines festgelegten Bildes, das eine Matrix von Punkten oder Pixeln definiert, erhalten werden, oder zum anderen durch Aufbringen von schwarzen Tintenpunkten aus einem Digitaldrucker auf der Grundlage eines festgelegten Bildes, das eine Matrix von Punkten oder Pixeln definiert, erhalten werden, worin die Dichte der Absorptionspunkte sinusförmig variiert, wobei die Anordnung der Absorptionspunkte auf der äußeren Oberfläche (12) derart ist, dass, wenn der Reflektor (8) sich gleichmäßig und in der gleichen Drehrichtung (S1, S2) dreht, das repräsentative elektrische Signal (26A, 26B), das von jedem Detektor (18) jedes Paares (10A, 10B) im Wesentlichen sinusförmig ist,
**dadurch gekennzeichnet, dass** das System umfasst:
zwei Paare (10A, 10B) aus Sender und Detektor, wobei die beiden Paare (10A, 10B) auf beiden Seiten des rotierenden Reflektors (8) gegenüber dem Reflektor (8) angeordnet sind, wobei jedes Paar (10A, 10B) aus Sender und Detektor eine Lichtquelle (16), die dazu bestimmt ist, einen Teil des Reflektors (8) zu beleuchten, und einen Lichtdetektor (18) umfasst, der dazu bestimmt ist, einen Strahl reflektierten Lichts (24), der vom Reflektor (8) ausgeht, zu empfangen und ein elektrisches Signal (26A, 26B) zu erzeugen, das repräsentativ für diesen Strahl (24) ist.

2. System zur Bestimmung (6) nach Anspruch 1, **dadurch gekennzeichnet, dass** die beiden Paare (10A, 10B) aus Sender und Detektor in Bezug auf den rotierenden Reflektor (8) so angeordnet sind, dass die beiden Sender (16) bzw. die beiden Detektoren (18) zueinander entgegengesetzt angeordnet sind.

3. System zur Bestimmung (6) nach Anspruch 1 oder 2, **dadurch gekennzeichnet, dass** die beiden Paare (10A, 10B) aus Sender und Detektor auf beiden Seiten des rotierenden Reflektors (8) auf einem Kreis angeordnet sind, dessen Mittelpunkt weitgehend ein Mittelpunkt (22) des rotierenden Reflektors (8) ist, und zueinander um einen Winkel versetzt sind, der einen unterschiedlichen Wert von 180° aufweist.

4. System zur Bestimmung (6) nach Anspruch 3, **dadurch gekennzeichnet, dass** die beiden Paare (10A, 10B) aus Sender und Detektor und rotierendem Reflektor (8) so angeordnet sind, dass sie eine räumliche Anordnung festlegen, die weitgehend die Form eines "y" hat, der rotierende Reflektor (8) in der Mitte des "y" angeordnet ist, wobei eines der Paare (10A) aus Sender und Detektor am freien Ende eines kurzen Schenkels des "y" angeordnet ist und das andere Paar (10B) aus Sender und Detektor am freien Ende des langen Schenkels des "y" angeordnet ist.

5. System zur Bestimmung (6) nach einem der vorhergehenden Ansprüche, **dadurch gekennzeichnet, dass** in jedem Paar (10A, 10B) von Sender und Detektor der Sender (16) und der Detektor (18) optisch voneinander getrennt sind.

6. System zur Bestimmung (6) nach Anspruch 1, **dadurch gekennzeichnet, dass** der drehbare Reflektor (8) aus Metall besteht, wobei die Außenfläche (12) des Metallreflektors poliert ist.

7. System zur Bestimmung (6) nach Anspruch 6, **dadurch gekennzeichnet, dass** die Dichte der über den gesamten Umfang der Außenfläche gravierten oder gedruckten absorbierenden Punkte in zwei Sinuswellenperioden variiert wird.

8. Zeitmessgerät (1) mit einem System zur Bestimmung (6) mindestens eines Parameters, der sich auf eine Winkelbewegung einer Achse (4) bezieht, **dadurch gekennzeichnet, dass** das System zur Bestimmung (6) einem der vorhergehenden Ansprüche entspricht.

9. Zeitmessgerät (1) nach Anspruch 8, **dadurch gekennzeichnet, dass** das Zeitmessgerät (1) eine Quarzuhr ist, die mit einer Krone (2) zum Einstellen der Uhrzeit versehen ist, wobei die Achse (4) die Achse (4) ist, die fest mit der Krone (2) verbunden ist.

10. Verfahren zur Bestimmung mindestens eines Parameters bezüglich einer Winkelbewegung einer Achse (4), insbesondere einer Achse (4), die fest mit einer Krone (2) eines Zeitmessgeräts (1) verbunden ist, mithilfe eines Systems zur Bestimmung (6) nach einem der Ansprüche 1 bis 6, wobei das Verfahren die folgenden Schritte umfasst, die durch den Prozessor ausgeführt werden:
- Empfangen (32) von zwei elektrischen Signalen (26A, 26B), die von den beiden Lichtdetektoren (18) stammen, wobei jedes der elektrischen Signale (26A, 26B) repräsentativ für einen Strahl reflektierten Lichts (24) ist, der von dem Reflektor (8) stammt, wobei jedes der elektrischen Signale (26A, 26B) eine weitgehend sinusförmige Form aufweist,
- Bestimmen (34) der Frequenz jedes der beiden empfangenen elektrischen Signale (26A, 26B);
- Bestimmen (36), durch Vergleich zwischen der vom Prozessor bestimmten Frequenz und einer im Voraus in Speichermitteln des Systems (6) gespeicherten Korrespondenztabelle, der Drehgeschwindigkeit der Achse (4).

11. Verfahren zur Bestimmung nach Anspruch 10, wenn das System zur Bestimmung (6) von Anspruch 3 abhängt, **dadurch gekennzeichnet, dass** es außerdem einen vom Prozessor ausgeführten Schritt (38) umfasst, der darin besteht, die beiden empfangenen elektrischen Signale (26A, 26B) als Sinus und Kosinus ein und derselben Funktion wiederzugeben und eine Arcustangens-Funktion (39) zu berechnen, deren Variable das Verhältnis zwischen den beiden Signalen ist.

12. Verfahren zur Bestimmung nach Anspruch 11, **dadurch gekennzeichnet, dass** es außerdem einen Schritt (40) umfasst, der vom Prozessor ausgeführt wird und darin besteht, in Abhängigkeit vom Vorzeichen der Steigung der berechneten Arcustangens-Funktion (39) die Drehrichtung der Achse (4) zu bestimmen.

13. Verfahren zur Bestimmung nach einem der Ansprüche 10 bis 12, **dadurch gekennzeichnet, dass** es außerdem einen Schritt (30) umfasst, der von dem Prozessor ausgeführt wird und in dem das Einschalten jeder der Lichtquellen (16) auf abwechselnde Weise gesteuert wird.

14. Programmprodukt für einen Computer mit Programmanweisungen, die in Speichermitteln eines Systems zur Bestimmung (6) nach einem der Ansprüche 1 bis 6 gespeichert sind und die, wenn sie von dem Prozessor des Systems zur Bestimmung (6) ausgeführt werden, geeignet sind, das Verfahren nach einem der Ansprüche 10 bis 13 zur Bestimmung mindestens eines Parameters in Bezug auf eine Winkelbewegung einer Achse (4) durchzuführen.

## Claims

1. System (6) for determining at least one parameter relating to an angular movement of an arbor (4), particularly an arbor (4) integral with a timepiece (1) crown (2), the system (6) comprising:
- an arbor (4) configured to be able to rotate on itself around a longitudinal direction (D1),
- a rotating reflector (8) mounted on the arbor (4), around said arbor (4),
- a processor configured to process each of the electrical signals generated by the detectors (18), and to determine, as a function of the processing result, said at least one parameter relating to the angular movement of the arbor (4),
the rotating reflector (8) being in the form of a cylinder of revolution, and an arrangement of light absorption points is made over the entire circumference of a reflective outer surface (12) of the cylinder of revolution, the points of the light absorption point arrangement over the entire circumference of the outer surface (12) of the cylinder of revolution, on the one hand, being obtained by etching using a laser controlled on the basis of a determined image defining a matrix of points or pixels, or, on the other hand, being obtained by depositing points of black ink from a digital printer on the basis of a determined image defining a matrix of points or pixels, wherein the density of the absorption points varies in a sinusoidal manner, the arrangement of the absorption points over the outer surface (12) being such that, when the reflector (8) rotates on itself in a regular manner and in the same direction of rotation (S1, S2), the representative electrical signal (26A, 26B) generated by each detector (18) of each pair (10A, 10B) has a substantially sinusoidal shape,
**characterised in that** the system comprises:
- two emitter/detector pairs (10A, 10B), the two pairs (10A, 10B) being disposed on either side of the rotating reflector (8), facing the reflector (8), each emitter/detector pair (10A, 10B) including one light source (16) intended to illuminate one part of the reflector (8), and one light detector (18) intended to receive a reflected light beam (24) from the reflector (8) and to generate an electrical signal (26A, 26B) representative of said beam (24).

2. Determination system (6) according to claim 1, **characterised in that** the two emitter/detector pairs (10A, 10B) are arranged with respect to the rotating reflector (8) such that the two emitters (16), respectively the two detectors (18), are arranged head-to-tail with respect to each other.

3. Determination system (6) according to claim 1 or 2, **characterised in that** the two emitter/detector pairs (10A, 10B) are disposed on either side of the rotating reflector (8), on a circle whose centre is substantially a centre (22) of the rotating reflector (8), and are offset from each other by an angle having a value other than 180°.

4. Determination system (6) according to claim 3, **characterised in that** the two emitter/detector pairs (10A, 10B) and the rotating reflector (8) are disposed so as to define a substantially Y-shaped spatial arrangement, the rotating reflector (8) being disposed at the centre of the Y, one of the emitter/detector pairs (10A) being disposed at the free end of a short arm of the Y, and the other emitter/detector pair (10B) being disposed at the free end of the long arm of the Y.

5. Determination system (6) according to any one of the preceding claims, **characterised in that**, in each emitter/detector pair (10A, 10B), the emitter (16) and the detector (18) are optically isolated from each other.

6. Determination system (6) according to claim 1, **characterised in that** the rotating reflector (8) is made of metal, the outer surface (12) of the metal reflector being polished.

7. Determination system (6) according to claim 6, **characterised in that** the density of the absorption points etched or printed over the entire circumference of the outer surfaces varies in two sine wave periods.

8. Timepiece (1) comprising a system (6) for determining at least one parameter relating to an angular movement of an arbor (4), **characterised in that** the determination system (6) conforms to any one of the preceding claims.

9. Timepiece (1) according to claim 8, **characterised in that** the timepiece (1) is a quartz watch provided with a time-setting crown (2), said arbor (4) being the arbor (4) integral with the crown (2).

10. Method for determining at least one parameter relating to an angular movement of an arbor (4), particularly an arbor (4) integral with a crown (2) of a timepiece (1), by means of a determination system (6) according to any one of claims 1 to 6, the method comprising the following steps, implemented by the processor:
- receiving (32) two electrical signals (26A, 26B) from the two light detectors (18), each of the electrical signals (26A, 26B) being representative of a reflected light beam (24) from the reflector (8), each of the electrical signals (26A, 26B) having a substantially sinusoidal shape,
- determining (34) the frequency of each of the two received electrical signals (26A, 26B),
- determining (36), by comparison between the frequency determined by the processor and a correspondence table pre-stored in memory means of the system (6), the speed of rotation of the arbor (4).

11. Determination method according to claim 10 when the determination system (6) depends on claim 3, **characterised in that** it further includes a step (38), implemented by the processor, consisting in representing the two received electrical signals (26A, 26B) as the sine and cosine of a same function and calculating an arctangent function (39) whose variable is the ratio between the two signals.

12. Determination method according to claim 11, **characterised in that** it further includes a step (40), implemented by the processor, consisting in determining, according to the sign of the slope of the calculated arctangent function (39), the direction of rotation of the arbor (4).

13. Determination method according to any of claims 10 to 12, **characterised in that** it further includes a step (30), implemented by the processor, consisting in alternately controlling the illumination of each of the light sources (16).

14. Computer program product comprising program instructions stored in memory means of a determination system (6) according to any of claims 1 to 6 and which, when executed by the determination system (6) processor, are able to implement the method according to any of claims 10 to 13, for the determination of at least one parameter relating to an angular movement of an arbor (4).
